# EUROPEAN PATENT SPECIFICATION

(11) **EP 2 933 990 B1**
(45) Date of publication and mention of the grant of the patent: **28.02.2018**
(21) Application number: 15164138.8
(22) Date of filing: 17.04.2015
(51) Int. Cl.: H04L 29/08, H04M 1/725, H04W 4/02, H04W 4/00

(54) **METHOD AND DEVICE FOR PROMPTING A USER**
VERFAHREN UND VORRICHTUNG ZUR AUFFORDERUNG EINES BENUTZERS
PROCÉDÉ ET DISPOSITIF POUR INVITER UN UTILISATEUR

(30) Priority: 17.04.2014 CN 201410155540
(43) Date of publication of application: 21.10.2015
(73) Proprietor: Xiaomi Inc., Beijing 100085 (CN)
(72) Inventor: Wang, Bin, 100085 Haidian District (CN); Zheng, Zhiguang, 100085 Haidian District (CN); Ji, Dongfang, 100085 Haidian District (CN); Chen, Qiliang, 100085 Haidian District (CN); Ou, Jinliang, 100085 Haidian District (CN)
(74) Representative: Reeve, Nicholas Edward

(56) References cited:
- EP-A2- 1 361 766
- GB-A- 2 426 667
- Juan Carlos ET AL: "Ambient Intelligence and Smart Environments: A State of the Art", , 1 January 2010 (2010-01-01), XP55206740, DOI: 10.1007/978-0-387-93808-0_1 Retrieved from the Internet: URL:http://eis.sla.mdx.ac.uk/staffpages/ju anaugusto/intro_v12.pdf [retrieved on 2015-08-07]

## Description

### TECHNICAL FIELD

The present disclosure relates to a field of terminal technology, and more particularly, to a method and a device for prompting a user.

### BACKGROUND

With the development of terminal technology, the terminal equipments such as mobile phones, tablet PCs have become indispensable products in people's life and work.

Some special occasions may often appear in people's work and life, and in such special occasions, there needs some corresponding operations or settings for the terminal, to adapt to the usage scenario of the special occasions. For example, when entering into a meeting room or a theater to watch a movie, since the current occasion needs to keep quiet as much as possible, people will choose to set the profile of the terminal to a silent mode, and set the profile of the terminal back to a normal mode when leaving the meeting room or the theater.

At least the following problems are found to exist in the related art.

People often forget to change the settings or change the settings untimely in the special scenarios, which leads to the consequence of failure and reduces the interaction between the user and the terminal.

The handbook excerpt "Ambient Intelligence and Smart Environments: A State of the Art, by Juan Carlos, provides a brief summary in section 3.4 of collaborative context recognition for mobile devices. This section proposes an arrangement in which mobile devices can through short-range links, query each other's context information and then arrive at a shared interpretation of the situation to mimic behaviour. EP1361766 in the name of Nokia describes a system and method for location dependent services for mobile stations using short range wireless technology such as Bluetooth. An access point creates records of mobile stations within its coverage area, including the length of time that a mobile station has been its coverage area, and suggests profile changes to the mobile stations. The suggested profile is programmed into the access point by the system operator based on an event that is to occur within the coverage area of the access point.

In view of the problems in the related art, we have appreciated that it would be desirable to provide a method and a device for prompting a user. The technical solutions are as follows.

### SUMMARY OF THE INVENTION

According to a first aspect of the invention, there is provided a computer implemented method for prompting a user of a terminal, characterized in that the method comprises, at a server, the steps of: a) periodically receiving position information of a plurality of terminals; b) detecting whether there are a preset number of terminals performing a designated operation in the same area within a preset time period; c) detecting a terminal not performing the designated operation within the same area, if there are the preset number of terminals performing the designated operation in the same area within the preset time period; and d) sending prompt information to the detected terminal not performing the designated operation, the prompt information for prompting the user to perform the designated operation; wherein detecting whether there are the preset number of terminals performing the designated operation in the same area within the preset time period comprises: b1) periodically receiving from terminals in the plurality of terminals an operation record directed at the designated operation reported by a terminal, the operation record including an operation time of when the designated operation was performed and position information of the terminal, and being generated in a terminal when the terminal detects that a designated operation has been performed, the operation records being saved at the server; and b2) periodically analyzing the saved operation records to detect whether there are the preset number of terminals performing the designated operation in the same area within the preset time period in accordance with the operation record; and wherein detecting a terminal not performing the designated operation within the area includes: detecting a terminal which does not report an operation record directing at the designated operation within the preset time period, and which has the same position information as that of the detected terminals performing the designated operation.

Optionally, the method comprises receiving the position information reported by a terminal not performing the designated operation, before detecting whether there are the preset number of terminals performing the designated operation in the same area within the preset time period.

Optionally, the position information includes: at least one of an identification of a base station accessed by the terminal, a network identification and geography position information.

Optionally, the prompt information carries an instruction for performing the designated operation.

Optionally, according to a second aspect of embodiments of the present disclosure, there is provided a device comprising: a detecting module configured to periodically receive position information of a plurality of terminals, and detect whether there are a preset number of terminals performing a designated operation in the same area within a preset time period; an inquiring module configured to detect a terminal not performing the designated operation within the same area, if it is detected that there are the preset number of terminals performing the designated operation in the same area within the preset time period; and a sending module configured to send prompt information to the detected terminal not performing the designated operation, the prompt information for prompting the user to perform the designated operation; wherein the detecting module comprises: a receiving sub module configured to periodically receive from terminals in the plurality of terminals an operation record directed at the designated operation reported by the terminal, the operation record including an operation time of when the designated operation was performed and position information of the terminal, and being generated in the terminal when the terminal detects that a designated operation has been performed, the operation records being saved at the server; and a detecting sub module configured to periodically analyse the saved operation records to detect whether there are the preset number of terminals performing the designated operation in the same area within the preset time period in accordance with the operation record; and wherein the inquiring module is configured to detect a terminal which does not report an operation record directing at the designated operation within the preset time period, and has the same position information as that of the detected terminals. The detecting module includes: a receiving unit configured to receive an operation record directing at the designated operation reported by the terminal, the operation record carrying with an operation time for performing the designated operation and position information; and a detecting unit configured to detect whether there are the preset number of terminals performing the designated operation in the same area within the preset time period in accordance with the operation record.

Optionally, the device further includes: a receiving module configured to receive position information reported by the terminal not performing the designated operation.

Optionally, the position information includes: at least one of an identification of a base station accessed by the terminal, a network identification and geography position information.

According to a third aspect of embodiments of the present disclosure, there is provided a terminal for use with the device of the second aspect, comprising: a generation module for generating an operation record, wherein the operation record is generated in the terminal when the terminal detects that a designated operation has been performed, and a communication module for transmitting the operation record to the device.

According to a fourth aspect of embodiments of the present disclosure, there is provided a computer program which when executed on a processor of a device for prompting a user, causes the device to perform the method of the first aspect of embodiments of the present invention.

The technical solutions provided by the embodiments of the present disclosure may include the following advantageous effects: by detecting whether there are a preset number of terminals performing a designated operation in the same area within a preset time period, and sending prompt information to the terminal not performing the designated operation in the same area to prompt the user to perform the designated operation when it is detected that there are the preset number of terminals performing the designated operation in the same area within the preset time period, the interaction between the user and the terminal is improved, and the failure consequence brought by the user not performing the designated operation is avoided.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for prompting a user according to an exemplary embodiment of the present disclosure.
Fig. 2 is a flow chart of a method for prompting a user according to an exemplary embodiment of the present disclosure.
Fig. 3 is a block diagram of a device for prompting a user according to an exemplary embodiment of the present disclosure.
Fig. 4 is a block diagram of a terminal according to an exemplary embodiment of the present disclosure.

### DESCRIPTION OF THE EMBODIMENTS

In order to make the technical solutions and advantages of the present disclosure more apparent, hereinafter, the embodiments of the present disclosure will be further described in detail with reference to the drawings.

### First Embodiment

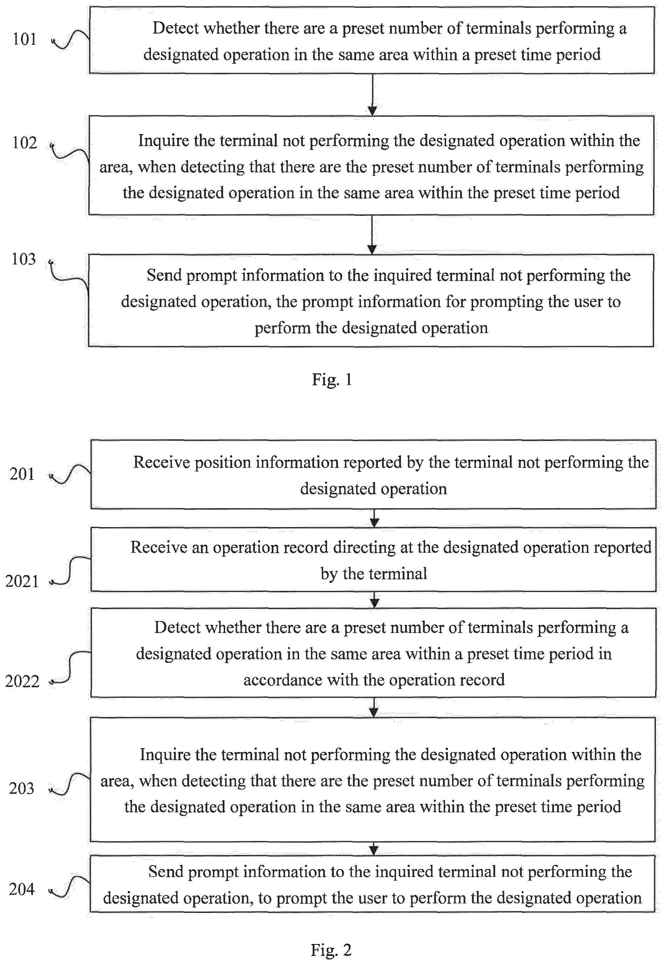

The embodiments of the present disclosure provide a method for prompting a user, which is used in a server. Referring to Fig. 1, the method procedure includes the following steps.

In step 101, whether there are a preset number of terminals performing a designated operation in the same area within a preset time period is detected.

In step 102, if it is detected that there are the preset number of terminals performing the designated operation in the same area within the preset time period, the terminal not performing the designated operation within the area is inquired.

In step 103, prompt information is sent to the inquired terminal not performing the designated operation, the prompt information for prompting the user to perform the designated operation.

In the embodiments of the present disclosure, by detecting whether there are a preset number of terminals performing a designated operation in the same area within a preset time period, and if it is detected there are the preset number of terminals performing the designated operation in the same area within the preset time period, sending prompt information to the terminal not performing the designated operation in the same area to prompt the user to perform the designated operation, the interaction between the user and the terminal is improved, and the failure consequence brought by the user not performing the designated operation is avoided.

### Second Embodiment

The embodiments of the present disclosure provide a method for prompting a user, which is used in the server. Referring to Fig. 2, the method procedure includes the following steps.

In step 201, position information reported by the terminal not performing the designated operation is received.

The position information reported by the terminal includes, but is not limited to, at least one of an identification of a base station accessed by the terminal, a network identification and geography position information.

### The first case: the identification of the base station accessed by the terminal.

The identification of the base station may be an identification of a base station via which the terminal accesses the mobile network of the operator, or an identification of a base station accessed by the current position. Because the coverage of the base station is fixed, it can be determined that the terminals belonging to the same identification of the base station are in the same area. Further, in general, the base station is fixed, thus the exact position of the terminal can be determined in accordance with the identification of the base station. Optionally, the identification of the base station may also be an identification of a cell. The identification of the base station can be obtained through the relevant information of the operator with regard to the terminal accessing to the network.

### The second case: the network identification.

The network identification may include, but is not limited to, IP(Internet Protocol, the interconnection protocol between the networks) address of the terminal or WIFI (Wireless-fidelity) identification of the accessed network which will be reported by the terminal to the server when the terminal accesses to the Internet wired or wirelessly. The network identification can be obtained by the access information reported by the terminal.

Further, it can be judged that the terminals having the same IP address are located at the same position, and the terminals belonging to the same WIFI identification of the accessed network are located at the same position.

In the above two network identification cases, the specific position of the terminal may be unknown, but it can be determined that the positions of the terminals are the same.

### The third case: the geography position information.

The geography position information is latitude and longitude information obtained by the terminal in accordance with the built-in positioning module.

Optionally, after initiating a certain application in the terminal, the built-in positioning module of the terminal may be called to acquire the geography position information and report it to the server.

Optionally, the server may determine the position of the terminal based on the geography position information, and may determine the terminals having the same geography position information to be in the same area.

In step 202, whether there are a preset number of terminals performing a designated operation in the same area within a preset time period is detected.

The step 202 may be composed of step 2021- step 2022.

In the step 2021, an operation record directing at the designated operation reported by the terminal is received, the operation record carrying with an operation time for performing the designated operation and position information. The method of the present embodiment is used in the server.

The designated operation may include, but is not limited to, changing the profile; initiating the sound recording; initiating the video recording and so on. Further, there may be various designated operations simultaneously in the terminal operation, and the designated operations are distinguished by the corresponding category of individual designated operation.

Operation of the terminal by the operating system is monitored, and when a notification message corresponding to the designated operation is detected, it is determined that the terminal has performed the designated operation. At this time, the operation time for performing the designated operation currently is recorded, and the current position information is obtained, then the operation record directed at the designated operation is generated and is reported to the server.

Software running on the terminal, either as an application run on the operating system, or as functionality of the operating system itself, monitors the operations performed by the terminal. Such software is pre-programmed with suitable communication information allowing it to communicate with the server across the network.

Optionally, the current position information acquired by the terminal may be at least one of the three position information reported in the step 201. The terminal may determine the identification of the base station at which the terminal is currently located by the accessed mobile network; or determine the current IP address or WIFI identification by the accessed wireless network; or obtain the current geography position information by calling the positioning module to position.

The server receives and saves the operation records reported by respective terminals, and takes statistics to the designated operations in accordance with the operation time and position information in the operation records.

In the step 2022, whether there are the preset number of terminals performing the designated operation in the same area within the preset time period is detected in accordance with the operation records. The method of the embodiment is used in the server.

The preset time may be set in accordance with the type of the designated operation as appropriate. For example, when entering into the meeting room, because the meeting is about to begin, the preset time may be set as short as possible, so as to make the prompted user to change the setting quickly, for example, to set the preset time within two minutes.

The judgment of the same area is performed in accordance with the position information reported in the step 2021, which can be divided into the following three cases: screening out the terminals belonging to the same identification of the base station; or screening out the terminals belonging to the same network identification; or screening out the terminals belonging to the same geography position information.

The server screens and takes statistics to the operation records reported by each terminal in each period periodically. Firstly, the server determines the terminals performing the same designated operation within the preset time, then screens out the terminals in the same area in accordance with the position information of the terminals performing the same designated operation, and finally determines whether the number of the terminals performing the same designated operation in the same area is greater than the preset number.

In step 203, if it is detected that there are the preset number of terminals performing the designated operation in the same area within the preset time period, the terminal not performing the designated operation within the area is inquired.

When it is detected that there are the preset number of terminals performing the designated operation in the same area within the preset time period, the terminal not performing the designated operation within the area needs to be acquired, so as to send the prompt information to the terminals not performing the designated operation. The process of detecting a non-performing terminal may be as follows.

The terminal which does not report the operation record directing at the designated operation within the preset time period, and has the same position information as that of the detected terminal is detected. In this regard, the server is configured to receive position information from the plurality of terminals and so can determine for which terminals in the area an operation record has been received, and for which terminals an operation records has not been received. The position information is therefore transmitted from the terminals continuously, or periodically to the server.

The manner for judging the position information of the terminal not performing the designated operation and the position information of the detected terminal is the same as the process of screening in the step 2022, i.e. selecting the terminal belonging to the same identification of the base station as the position information of the detected terminal; or the terminal belonging to the same network identification; or the terminal belonging to the same geography position information.

In step 204, prompt information is sent to the inquired terminal not performing the designated operation, to prompt the user to perform the designated operation. The method of the present embodiment is used in the server.

The prompt information may include, but is not limited to, a short message, notification information and so on.

For example, when the users A, B, C and D have a meeting, the profile of the terminals of the users A, B and C are set to a silent mode sequentially within one minute, while the terminal of the user D does not perform the setting operation of the profile. At this time, the server judges that the terminals of the users A, B, C and D belong to the same area within the preset two minutes and detects that the terminals of the users A, B and C have performed the setting operation of the profile, while the terminal of the user D does not perform the setting operation of the profile, then the server sends the prompt information to the terminal of the user D, and the prompt content may be: Please set the profile of the terminal to the silent mode.

Optionally, the prompt information may further carry with the instruction for performing the designated operation. Following the prompt information sent to the terminal of the user D in the above example, when the instruction "Please set the profile of the terminal to silent mode" is promoted to the user, the user is prompted to select the confirm option. When the user D selects the confirm option, the profile of the terminal is set to the silent mode in accordance with the instruction for performing the designated operation carried by the prompt information.

Optionally, when the prompt information carries with the instruction for performing the designated operation, upon receiving the prompt information, the terminal of the user D performs setting or operation in accordance with the instruction of the designated operation directly and shows the literal content in the prompt information to the user D. At this time, the designated operation is performed forcibly without the conformation operation by the user D manually.

In the embodiments of the present disclosure, by detecting whether there are a preset number of terminals performing a designated operation in the same area within a preset time period, and if it is detected that there are the preset number of terminals performing the designated operation in the same area within the preset time period, sending prompt information to the terminal not performing the designated operation in the same area to prompt the user to perform the designated operation, the interaction between the user and the terminal is improved, and the failure consequence brought by the user not performing the designated operation is avoided.

### Third Embodiment

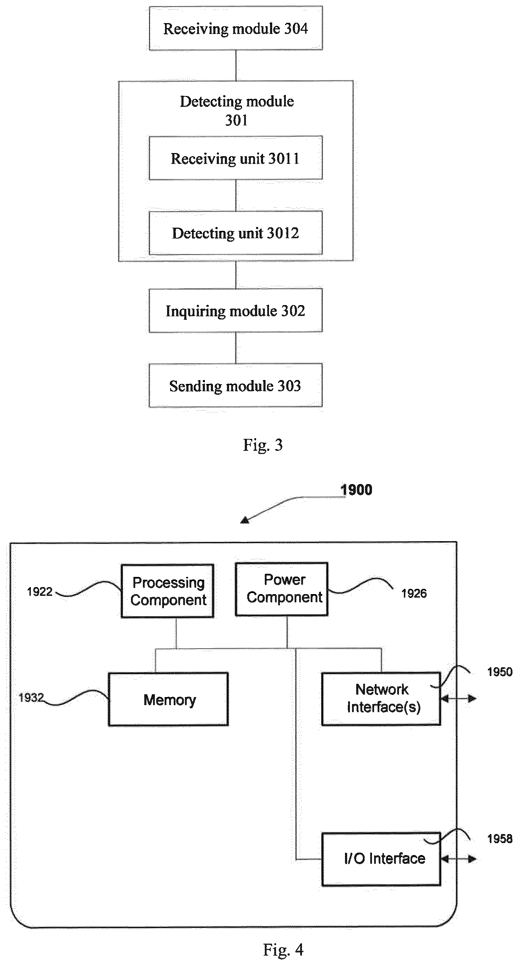

The embodiments of the present disclosure provide a device for prompting a user. Referring to Fig. 3, the device includes: a detecting module 301 configured to detect whether there are a preset number of terminals performing a designated operation in the same area within a preset time period; an inquiring module 302 configured to detect a terminal not performing the designated operation within the area, if it is detected that there are the preset number of terminals performing the designated operation in the same area within the preset time period; and a sending module 303 configured to send prompt information to the inquired terminal not performing the designated operation, the prompt information for prompting the user to perform the designated operation.

The detecting module 301 includes: a receiving sub module or unit 3011 configured to receive an operation record directing at the designated operation reported by the terminal, the operation record carrying with an operation time for performing the designated operation and position information; and a detecting sub module or unit 3012 configured to detect whether there are the preset number of terminals performing the designated operation in the same area within the preset time period in accordance with the operation record.

The inquiring module 302 is configured to: detect a terminal which does not report an operation record directing at the designated operation within the preset time period, and has the same position information as that of the detected terminal.

The device further includes: a receiving module 304 configured to receive position information reported by the terminal not performing the designated operation.

The position information includes at least one of an identification of a base station accessed by the terminal, a network identification and geography position information.

In the embodiments of the present disclosure, by detecting whether there are a preset number of terminals performing a designated operation in the same area within a preset time period, and when it is detected that there are the preset number of terminals performing the designated operation in the same area within the preset time period, sending prompt information to the terminal not performing the designated operation in the same area to prompt the user to perform the designated operation, the interaction between the user and the terminal is improved, and the failure consequence brought by the user not performing the designated operation is avoided.

### Fourth Embodiment

The embodiments of the present disclosure provide a device for prompting a user.

FIG. 4 is a block diagram of a device 1900 for prompting a user according to an exemplary embodiment. For example, the device 1900 may be provided as a server. Referring to FIG. 4, the device 1900 includes a processing component 1922 that further includes one or more processors, and memory resources represented by a memory 1932 for storing instructions, such as application programs, executable by the processing component 1922. The application programs stored in the memory 1932 may include one or more modules, each of them corresponding to a set of instructions. Further, the processing component 1922 is configured to execute the instructions to perform the above described method for prompting a user.

The device 1900 may also include a power component 1926 configured to perform power management of the device 1900, wired or wireless network interface(s) 1950 configured to connect the device 1900 to a network, and an input/output (I/O) interface 1958. The device 1900 may operate based on an operating system stored in the memory 1932, such as Windows ServerTM, Mac OS XTM, UnixTM, LinuxTM, FreeBSDTM, or the like.

In embodiments, the server may be a server process running on the terminal.

In embodiments, the terminal may include any portable computing device, such as a laptop computer, a tablet computer, a personal digital assistant, a mobile telephone, a smartphone, an internet enabled television receiver, media player, or games console.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A computer implemented method for prompting a user of a terminal, **characterized in that** the method comprises, at a server, the steps of:
a) periodically receiving position information of a plurality of terminals;
b) detecting (101) whether there are a preset number of terminals performing a designated operation in the same area within a preset time period;
c) detecting (102) a terminal not performing the designated operation within the same area, if there are the preset number of terminals performing the designated operation in the same area within the preset time period; and
d) sending (103) prompt information to the detected terminal not performing the designated operation, the prompt information for prompting the user to perform the designated operation;
wherein detecting whether there are the preset number of terminals performing the designated operation in the same area within the preset time period comprises:
b1) periodically receiving (2021) from terminals in the plurality of terminals an operation record directed at the designated operation reported by a terminal, the operation record including an operation time of when the designated operation was performed and position information of the terminal, and being generated in a terminal when the terminal detects that a designated operation has been performed, the operation records being saved at the server; and
b2) periodically analyzing the saved operation records to detect (2022) whether there are the preset number of terminals performing the designated operation in the same area within the preset time period in accordance with the operation record; and wherein
detecting a terminal not performing the designated operation within the area includes:
c1) detecting a terminal which does not report an operation record directing at the designated operation within the preset time period, and which has the same position information as that of the detected terminals performing the designated operation.

2. The method according to claim 1, wherein the method further comprises:
receiving (201) the position information reported by a terminal not performing the designated operation, before detecting whether there are the preset number of terminals performing the designated operation in the same area within the preset time period.

3. The method according to claims 1 or 2, wherein the position information comprises: at least one of an identification of a base station accessed by the terminal, a network identification and geography position information.

4. The method according to claim 1, 2 or 3, wherein the prompt information carries an instruction for performing the designated operation.

5. A device for prompting a user, **characterized in that** the device comprises:
a detecting module (301) configured to periodically receive position information of a plurality of terminals, and detect whether there are a preset number of terminals performing a designated operation in the same area within a preset time period;
an inquiring module (302) configured to detect a terminal not performing the designated operation within the same area, if it is detected that there are the preset number of terminals performing the designated operation in the same area within the preset time period; and
a sending module (303) configured to send prompt information to the detected terminal not performing the designated operation, the prompt information for prompting the user to perform the designated operation; wherein the detecting module comprises:
a receiving sub module (3011) configured to periodically receive from terminals in the plurality of terminals an operation record directed at the designated operation reported by the terminal, the operation record including an operation time of when the designated operation was performed and position information of the terminal, and being generated in the terminal when the terminal detects that a designated operation has been performed, the operation records being saved at the server; and
a detecting sub module (3012) configured to periodically analyse the saved operation records to detect whether there are the preset number of terminals performing the designated operation in the same area within the preset time period in accordance with the operation record;
and wherein the inquiring module (302) is configured to detect a terminal which does not report an operation record directing at the designated operation within the preset time period, and has the same position information as that of the detected terminals.

6. The device of according to claim 5, wherein the device further comprises:
a receiving module configured to receive position information reported by the terminal not performing the designated operation.

7. The device according to claim 5 or 6, **characterized in that** the position information comprises: at least one of an identification of a base station accessed by the terminal, a network identification and geography position information.

8. A terminal for use with the device of claims 5, 6 or 7, comprising:
a generation module for generating an operation record, wherein the operation record is generated in the terminal when the terminal detects that a designated operation has been performed,
a communication module for transmitting the operation record to the server.

9. A computer program which when executed on a processor of a device for prompting a user, causes the device to perform the method of any of claims 1 to 4.

## Patentansprüche

1. Computerimplementiertes Verfahren zum Auffordern eines Benutzers eines Endgeräts, **dadurch gekennzeichnet, dass** das Verfahren an einem Server die folgenden Schritte beinhaltet:
a) periodisches Empfangen von Positionsinformationen über mehrere Endgeräte;
b) Erkennen (101), ob es eine voreingestellte Anzahl von Endgeräten gibt, die eine designierte Operation im selben Bereich innerhalb einer voreingestellten Zeitperiode durchführen;
c) Erkennen (102) eines Endgeräts, das die designierte Operation im selben Bereich nicht durchführt, wenn es die vorbestimmte Anzahl von Endgeräten gibt, die die designierte Operation im selben Bereich innerhalb der voreingestellten Zeitperiode durchführen; und
d) Senden (103) von Aufforderungsinformationen zu dem erkannten Endgerät, das die designierte Operation nicht durchführt, wobei die Aufforderungsinformationen den Benutzer zum Durchführen der designierten Operation auffordern;
wobei das Erkennen, ob es die voreingestellte Anzahl von Endgeräten gibt, die die designierte Operation im selben Bereich innerhalb der voreingestellten Zeitperiode durchführen, Folgendes beinhaltet:
b1) periodisches Empfangen (2021), von Endgeräten aus der Mehrzahl von Endgeräten, eines Operationsdatensatzes, gerichtet auf die von einem Endgerät gemeldete designierte Operation, wobei der Operationsdatensatz eine Operationszeit, zu der die designierte Operation durchgeführt wurde, und Positionsinformationen des Endgeräts enthält und in einem Endgerät erzeugt wird, wenn das Endgerät erkennt, dass eine designierte Operation durchgeführt wurde, wobei die Operationsdatensätze am Server gespeichert werden; und
b2) periodisches Analysieren der gespeicherten Operationsdatensätze zum Erkennen (2022) anhand des Operationsdatensatzes, ob es die voreingestellte Anzahl von Endgeräten gibt, die die designierte Operation im selben Bereich innerhalb der voreingestellten Zeitperiode durchführen; und wobei
das Erkennen eines Endgeräts, das die designierte Operation innerhalb des Bereichs nicht durchführt, Folgendes beinhaltet:
c1) Erkennen eines Endgeräts, das keinen Operationsdatensatz meldet, der auf die designierte Operation innerhalb der voreingestellten Zeitperiode gerichtet ist und dieselben Positionsinformationen hat wie die der erkannten Endgeräte, die die designierte Operation durchführen.

2. Verfahren nach Anspruch 1, wobei das Verfahren ferner Folgendes beinhaltet:
Empfangen (201) der Positionsinformationen, gemeldet von einem Endgerät, das die designierte Operation nicht durchführt, vor dem Erkennen, ob es die voreingestellte Zahl von Endgeräten gibt, die die designierte Operation im selben Bereich innerhalb der voreingestellten Zeitperiode durchführen.

3. Verfahren nach Anspruch 1 oder 2, wobei die Positionsinformationen Folgendes umfassen: wenigstens eines aus einer Identifikation einer Basisstation, auf die das Endgerät zugreift, einer Netzwerkidentifikation und von geografischen Positionsinformation.

4. Verfahren nach Anspruch 1, 2 oder 3, wobei die Aufforderungsinformationen eine Anweisung zum Durchführen der designierten Operation führen.

5. Vorrichtung zum Auffordern eines Benutzers, **dadurch gekennzeichnet, dass** die Vorrichtung Folgendes umfasst:
ein Erkennungsmodul (301), konfiguriert zum periodischen Empfangen von Positionsinformationen einer Mehrzahl von Endgeräten und zum Erkennen, ob es eine voreingestellte Zahl von Endgeräten gibt, die eine designierte Operation im selben Bereich innerhalb einer voreingestellten Zeitperiode durchführen;
ein Anfragemodul (302), konfiguriert zum Erkennen eines Endgeräts, das die designierte Operation innerhalb desselben Bereichs nicht durchführt, wenn erkannt wird, dass es die voreingestellte Anzahl von Endgeräten gibt, die die designierte Operation im selben Bereich innerhalb der voreingestellten Zeitperiode durchführen; und
ein Sendemodul (303), konfiguriert zum Senden von Aufforderungsinformationen zu dem erkannten Endgerät, das die designierte Operation nicht durchführt, wobei die Aufforderungsinformationen den Benutzer zum Durchführen der designierten Operation auffordern; wobei das Erkennungsmodul Folgendes umfasst:
ein Empfangssubmodul (3011), konfiguriert zum periodischen Empfangen, von Endgeräten aus der Mehrzahl von Endgeräten, eines Operationsdatensatzes, der auf die durch das Endgerät gemeldete designierte Operation gerichtet ist, wobei der Operationsdatensatz eine Operationszeit, zu der die designierte Operation durchgeführt wurde, und Positionsinformationen des Endgeräts enthält und in dem Endgerät erzeugt wird, wenn das Endgerät erkennt, dass eine designierte Operation durchgeführt wurde, wobei die Operationsdatensätze am Server gespeichert werden; und
ein Erkennungssubmodul (3012), konfiguriert zum periodischen Analysieren der gespeicherten Operationsdatensätze, um anhand des Operationsdatensatzes zu erkennen, ob es die voreingestellte Anzahl von Endgeräten gibt, die die designierte Operation im selben Bereich innerhalb der voreingestellten Zeitperiode durchführen;
und wobei das Anfragemodul (302) zum Erkennen eines Endgeräts konfiguriert ist, das keinen Operationsdatensatz meldet, der auf die designierte Operation innerhalb der voreingestellten Zeitperiode gerichtet ist und dieselben Positionsinformationen hat wie die der erkannten Endgeräte.

6. Vorrichtung nach Anspruch 5, wobei die Vorrichtung ferner Folgendes umfasst:
ein Empfangsmodul, konfiguriert zum Empfangen von Positionsinformationen, die von dem Endgerät gemeldet werden, das die designierte Operation nicht durchführt.

7. Vorrichtung nach Anspruch 5 oder 6, **dadurch gekennzeichnet, dass** die Positionsinformationen Folgendes umfassen: wenigstens eines aus einer Identifikation einer Basisstation, auf die das Endgerät zugreift, einer Netzwerkidentifikation und von geografischen Positionsinformationen.

8. Endgerät zur Verwendung mit der Vorrichtung nach Anspruch 5, 6 oder 7, das Folgendes umfasst:
ein Erzeugungsmodul zum Erzeugen eines Operationsdatensatzes, wobei der Operationsdatensatz in dem Endgerät erzeugt wird, wenn das Endgerät erkennt, dass eine designierte Operation durchgeführt wurde,
ein Kommunikationsmodul zum Senden des Operationsdatensatzes zum Server.

9. Computerprogramm, das bei Ausführung auf einem Prozessor einer Vorrichtung zum Auffordern eines Benutzers bewirkt, dass die Vorrichtung das Verfahren nach einem der Ansprüche 1 bis 4 ausführt.

## Revendications

1. Procédé mis en oeuvre par ordinateur pour inviter un utilisateur d'un terminal, **caractérisé en ce que** le procédé comprend, à un serveur, les étapes consistant à :
a) recevoir périodiquement une information de position d'une pluralité de terminaux ;
b) détecter (101) s'il y a un nombre préréglé de terminaux effectuant une opération désignée dans la même zone dans une période de temps préréglée ;
c) détecter (102) un terminal n'effectuant pas l'opération désignée dans la même zone, s'il y a le nombre préréglé de terminaux effectuant l'opération désignée dans la même zone dans la période de temps préréglée ; et
d) envoyer (103) une information d'invite au terminal détecté n'effectuant pas l'opération désignée, l'information d'invite pour inviter l'utilisateur à effectuer l'opération désignée ;
dans lequel le fait de détecter s'il y a le nombre préréglé de terminaux effectuant l'opération désignée dans la même zone dans la période de temps préréglée comprend :
b1) recevoir périodiquement (2021) des terminaux dans la pluralité de terminaux, un enregistrement d'opération s'adressant à l'opération désignée signalé par un terminal, l'enregistrement d'opération comprenant une heure d'opération de lorsque l'opération désignée a été effectuée et une information de position du terminal, et étant généré dans un terminal lorsque le terminal détecte qu'une opération désignée a été effectuée, les enregistrements d'opération étant sauvegardés au serveur ; et
b2) analyser périodiquement les enregistrements d'opération sauvegardés pour détecter (2022) s'il y a le nombre préréglé de terminaux effectuant l'opération désignée dans la même zone dans la période de temps préréglée conformément à l'enregistrement d'opération ; et dans lequel
le fait de détecter un terminal n'effectuant pas l'opération désignée dans la zone comprend :
c1) détecter un terminal qui ne signale pas un enregistrement d'opération s'adressant à l'opération désignée dans la période de temps préréglée, et qui a la même information de position que celle des terminaux détectés effectuant l'opération désignée.

2. Procédé selon la revendication 1, où le procédé comprend en outre :
recevoir (201) l'information de position signalée par un terminal n'effectuant pas l'opération désignée, avant de détecter s'il y a le nombre préréglé de terminaux effectuant l'opération désignée dans la même zone dans la période de temps préréglée.

3. Procédé selon la revendication 1 ou 2, dans lequel l'information de position comprend au moins l'une d'entre : une identification d'une station de base à laquelle le terminal accède, une identification de réseau et une information de position géographique.

4. Procédé selon la revendication 1, 2 ou 3, dans lequel l'information d'invite porte une instruction pour effectuer l'opération désignée.

5. Dispositif pour inviter un utilisateur, **caractérisé en ce que** le dispositif comprend :
un module de détection (301) configuré pour recevoir périodiquement une information de position d'une pluralité de terminaux et détecter s'il y a un nombre préréglé de terminaux effectuant une opération désignée dans la même zone dans une période de temps préréglée ;
un module de consultation (302) configuré pour détecter un terminal n'effectuant pas l'opération désignée dans la même zone, s'il est détecté qu'il y a le nombre préréglé de terminaux effectuant l'opération désignée dans la même zone dans la période de temps préréglée ; et
un module émetteur (303) configuré pour envoyer une information d'invite au terminal détecté n'effectuant pas l'opération désignée, l'information d'invite pour inviter l'utilisateur à effectuer l'opération désignée ; où le module de détection comprend :
un sous-module récepteur (3011) configuré pour recevoir périodiquement des terminaux dans la pluralité de terminaux un enregistrement d'opération s'adressant à l'opération désignée signalé par le terminal, l'enregistrement d'opération comprenant une heure de lorsque l'opération désignée a été effectuée et une information de position du terminal, et étant généré dans le terminal lorsque le terminal détecte qu'une opération désignée a été effectuée, les enregistrements d'opération étant sauvegardés au serveur ; et
un sous-module de détection (3012) configuré pour analyser périodiquement les enregistrements d'opération sauvegardés pour détecter s'il y a le nombre préréglé de terminaux effectuant l'opération désignée dans la même zone dans la période de temps préréglée conformément à l'enregistrement d'opération ;
et dans lequel le module de consultation (302) est configuré pour détecter un terminal qui ne signale pas un enregistrement d'opération s'adressant à l'opération désignée dans la période de temps préréglée et a la même information de position que celle des terminaux détectés.

6. Dispositif selon la revendication 5, où le dispositif comprend en outre :
un module récepteur configuré pour recevoir une information de position signalée par le terminal n'effectuant pas l'opération désignée.

7. Dispositif selon la revendication 5 ou 6, **caractérisé en ce que** l'information de position comprend l'une d'entre : une identification d'une station de base à laquelle le terminal accède, une identification de réseau et une information de position géographique.

8. Terminal à utiliser avec le dispositif selon les revendications 5, 6 ou 7, comprenant :
un module de génération pour générer un enregistrement d'opération, où l'enregistrement d'opération est généré dans le terminal lorsque le terminal détecte qu'une opération désignée a été effectuée,
un module de communication pour transmettre l'enregistrement d'opération au serveur.

9. Programme informatique qui lorsque exécuté sur un processeur d'un dispositif pour inviter un utilisateur, fait que le dispositif effectue le procédé selon l'une quelconque des revendications 1 à 4.
